# EUROPÄISCHE PATENTSCHRIFT

(11) **EP 4 232 327 B1**
(45) Veröffentlichungstag und Bekanntmachung des Hinweises auf die Patenterteilung: **09.12.2026**
(21) Anmeldenummer: 21794751.4
(22) Anmeldetag: 06.10.2021
(51) Int. Cl.: B60T 17/22, B60T 8/1755

(54) **GIERRATENREGELUNGSAKTIVIERUNG**
YAW RATE REGULATION ACTIVATION
ACTIVATION DE RÉGULATION DE VITESSE DE LACET

(30) Priorität: 23.10.2020 DE 102020213413
(43) Veröffentlichungstag der Anmeldung: 30.08.2023
(73) Patentinhaber: AUMOVIO Germany GmbH, 60488 Frankfurt am Main (DE)
(72) Erfinder: KERBER-WUNDERLICH, Henning, 60488 Frankfurt am Main (DE); SCHMIDT, Lennart, 60488 Frankfurt am Main (DE)
(74) Vertreter: Aumovio Corporation
(86) Internationale Anmeldenummer: PCT/DE2021/200146
(87) Internationale Veröffentlichungsnummer: WO 2022/083831

(56) Entgegenhaltungen:
- DE-A1- 10 154 028
- US-A1- 2006 273 657
- US-B2- 8 849 537

## Beschreibung

Die Erfindung betrifft ein Verfahren zur Gierratenregelung bei dem eine Gierratenregelungsfunktion zur Stabilisierung eines Fahrzeugs radindividuelle Bremseingriffe basierend auf einer ersten Referenzgierrate durchführt. Eine Gierratenregelungsfunktion oder Active Yaw Control (AYC) wird auch als ESC oder elektronisches Stabilitätsprogramm bezeichnet beziehungsweise ist Teil einer ebensolchen Funktionseinheit und führt bei Gierratenabweichungen gegenüber einer Referenzgierrate radindividuelle Bremseingriffe durch.

Für Systeme, die unabhängig von einem Fahrerwunsch in die Steuerung des Fahrzeugs, das heißt in den Antrieb, die Lenkung und/oder die Bremsen, eingreifen, fordert die ISO 26262, dass im Hinblick auf die funktionale Sicherheit abhängig von der Risikobewertung während der Entwicklung bestimmte Maßnahmen ergriffen werden, um das Risiko zu begrenzen. Entsprechend des potentiellen Risikos erfolgt eine Einstufung in die Klassen QM oder ASIL A bis ASIL D, wobei die Schwere der Auswirkung (severity - S), die Häufigkeit der Fahrsituation (exposure - E) und die Beherrschbarkeit der Fehlfunktion durch den Fahrer (controllability - C) abgeschätzt werden.

Diese Systematik ergibt für die Gierratenregelung im Nutzfall aufgrund der geringen Auftretenswahrscheinlichkeit ein ASIL B. Die Vermeidung einer Destabilisierung durch einen fehlerhaften Eingriff im Nicht-Nutzfall wird hingegen mit ASIL D bewertet. Um nicht die gesamte Funktion nach ASIL D auslegen zu müssen, wird eine Architektur gewählt, in der der Gierratenregelungsfunktion eine Deaktivierungskomponente (FunctionDisabling, FD) vorgelagert ist, die die eigentliche Funktion nur in bestimmten Nutzfällen, sogenannten "Use Cases" freischaltet, sowie eine Sicherheitsbarriere ("Safety Barrier") nachgelagert wird, welche Anforderungen an den Aktuator nur durchschaltet, beziehungsweise nur voll durchschaltet, wenn eine Freischaltung durch die Deaktivierungskomponente im Nutzfall erfolgt ist. Andernfalls erfolgt eine Limitierung der Anforderung bis hin zu gar keiner Aktuierung.

Da eine zu strenge Nutzfall-Erkennung dazu führen kann, dass Eingriffe zu spät oder zu schwach erfolgen, wurden für die bisherige implementierte Nutzfall-Erkennung alle Situationen bis auf die ungebremste stabile Geradeausfahrt als Use-Cases definiert. Damit wurde eine unerwünschte Beschneidung von Gierratenregelungseingriffen vermieden. Da die Häufigkeit der Freischaltung jedoch sehr hoch ist, gelten für die bisherige Gierratenregelungsfunktion weiter die Anforderungen nach ASIL D. Insgesamt ist der Entwicklungsaufwand für ASIL D-Komponenten deutlich größer als für ASIL B-Komponenten. Eine Maßnahme dabei ist, dass die Funktion in einer Safety Task laufen muss, um eine geforderte "freedrom from interference" von Nicht-ASIL-D auf ASIL D-Komponenten sicherzustellen.

Aus der US 2006 / 273 657 A1 ist ein Verfahren für ein sensitives elektronisches Stabilitätsprogramm (SESP) zur Fahrsituationserkennung bekannt, dass eine Gierratenregelung umfasst. Die verschiedene Fahrsituationen werden unterschieden und bei der Steuerung berücksichtigt, wobei die Steuerung je nach Regelschwellen aktiv oder inaktiv ist. Es wird je nach Fahrsituation das SESP mit verringerten Steuerungseingriffen oder ein gewöhnliches elektronisches Stabilitätsprogramm mit aktiver Gierratensteuerung (AYC) aktiviert.

Die DE 101 54 028 A1 zeigt ein Verfahren und eine Vorrichtung zur situationsabhängigen und fahrerabhängigen Abschwächung von ESP-Stabilisierungseingriffen. Überschreitet eine Differenz zwischen einer Sollgiergeschwindigkeit und einer Ist-Giergeschwindigkeit einen Schwellenwert, so finden Reglereingriffe durch das ESP statt, andernfalls finden keine Reglereingriffe statt. Vor dieser Überprüfung kann diese Differenz unter Einbeziehung mehrerer fahrdynamischer Größen wie dem Lenkwinkel und der Querbeschleunigung reduziert werden.

US 8 849 537 B2 zeigt ein Fahrzeug-Steuerungs-Verfahren in dem ein Lenkwinkel, eine Raddrehzahl, eine laterale G-Kraft und eine Gierrate berechnet werden. Wenn die laterale G-Kraft größer als ein vorbestimmter Wert ist, wird eine Rollstabilitäts-Steuerung durchgeführt, um das Drehmoment zu verringern. Wenn eine Differenz zwischen einer angeforderten Gierrate und der tatsächlichen Gierrate größer als ein Gierraten-Steuerungs-Schwellwert ist, wird ein endgültiger Drehmomentwert gemäß der Differenz zwischen der angeforderten Gierrate und der tatsächlichen Gierrate erzeugt.

Aufgabe der Erfindung ist es daher ein Verfahren anzugeben, mit dem eine Gierratenregelungsfunktion freigegeben werden kann, welches die Vorgaben für ASIL B erfüllt.

Die Aufgabe wird gelöst durch ein erfindungsgemäßes Verfahren zur Gierratenregelung nach Anspruch 1, wobei eine eigentliche Gierratenregelungsfunktion zur Stabilisierung eines Fahrzeugs radindividuelle Bremseingriffe basierend auf einer ersten Referenzgierrate durchführt. Diese Referenzgierrate wird typischerweise aus einem Fahrzeugmodell und aktuellen Fahrparametern berechnet. Erfindungsgemäß ist nun eine separate Deaktivierungsfunktion vorgesehen, die die Gierratenregelungsfunktion freischaltet, sobald zumindest eine Aktivierungsvoraussetzung erfüllt ist. Die Trennung der Deaktivierungsfunktion von der Gierratenregelungsfunktion kann beispielsweise durch die Umschaltung zwischen Safety-Task mit eigenem Speicher und normaler Task erfolgen. Dadurch wird sichergestellt, dass Speicherinhalte der Safety-Task nicht ungewollt durch Funktionen, die in der normalen Task laufen, geändert werden können.

Als Aktivierungsvoraussetzung wird dabei zumindest überprüft, ob
- eine Längsverzögerung, insbesondere um eine Sensortoleranz größer ist als ein Längsverzögerungsgrenzwert,
- eine Querbeschleunigung insbesondere um eine Sensortoleranz größer ist als ein Querbeschleunigungsgrenzwert und
- eine Abweichung zwischen einer zweiten Referenzgierrate und einer gemessenen Gierrate insbesondere um eine Sensortoleranz größer ist als ein Gierratenabweichungsgrenzwert. Als zweite Referenzgierrate kann insbesondere eine von der ersten Referenzgierrate verschiedene Referenzgierrate verwendet werden. Die zweite Referenzgierrate kann beispielsweise aus einem von der ersten Referenzgierrate verschiedenen Fahrzeugmodell berechnet werden.

Beispielsweise kann für die Deaktivierungsfunktion ein einfaches stationäres Ackermann-Modell verwendet werden, für das mit geringem Aufwand ein ASIL D zu erreichen ist. Für die Gierratenregelungsfunktion kann dann ein komplexeres Modell verwendet werden, für das aufgrund seiner Komplexität und zusätzlichen Eingangssignale nur ein ASIL B erreicht werden kann.

Die zweite Referenzgierrate wird aus einem gemessenen Lenkwinkel und/oder einer gemessenen Querbeschleunigung des Fahrzeugs berechnet. Zur Berechnung der Referenzgierrate aus dem Lenkwinkel kann eine Formel aus dem Einspurmodell verwendet werden: $\dot{Ψ} = δ ⋅ \frac{v}{l + EG ⋅ {v}^{2}}$ mit der Gierrate Ψ̇, der Fahrzeuggeschwindigkeit v, dem Lenkwinkel δ, dem Radstand I und dem Eigenlenkgradienten. Der Eigenlenkgradient ergibt sich aus den unterschiedlichen Schräglaufsteifigkeiten von Vorder- und Hinterachse sowie aus der Schwerpunktslage und der Fahrzeugmasse. Er zeigt an, um wie weit das Lenkrad bei zunehmender Geschwindigkeit (und auch Querbeschleunigung) mehr eingeschlagen werden muss, um den gleichen Kurvenradius beizubehalten und die unterschiedlichen Schräglaufwinkel von Vorder- und Hinterachse auszugleichen.

Weicht die Ist-Gierrate von der aus dem Lenkwinkel berechneten Referenzgierrate um mehr als ein zulässiges Maß, den Gierratenabweichungsgrenzwert, ab, so kann auf eine instabile Fahrsituation, gleichbedeutend mit einem "Use Case", geschlossen werden. Die Deaktivierungsfunktion schaltet entsprechend die Gierratenregelungsfunktion frei.

Es kann vorkommen, dass der Fahrer mit dem Lenkwinkel eine Gierrate vorgibt, die auf dem vorhandenen Fahrbahnreibwert nicht stabil erreicht werden kann. In diesem Fall stimmt die Ist-Gierrate zwar mit der Lenkwinkel-Soll-Vorgabe überein, dennoch dreht das Fahrzeug langsam ein und baut einen Schwimmwinkel auf. Um einen solchen Fall als "UseCase" erkennen zu können, bietet es sich an, entweder die Referenzgierrate über eine Reibwertinformation zu begrenzen und/oder anhand der aktuellen Querbeschleunigung eine zweite Referenzgierrate zu berechnen. Auch hier gilt, dass aus der Abweichung zwischen der Ist-Gierrate und der aus der Querbeschleunigung berechneten Referenzgierrate auf eine instabile Fahrsituation geschlossen werden kann. Der Zusammenhang zwischen der Gierrate und der Querbeschleunigung bei stationärer Kreisfahrt ist gegeben: $\dot{Ψ} = \frac{{a}_{y}}{v}$ mit der Querbeschleunigung a_{y}.

Sobald mindestens einer der Gierratenvergleiche eine nennenswerte Abweichung anzeigt, kann auf eine instabile Fahrsituation und somit auf einen "Use Case" geschlossen werden.

Eine alleinige Freischaltung aufgrund einer erkannten instabilen Fahrsituation hätte den Nachteil, dass zuerst eine tatsächliche Gierratenabweichung vorliegen müsste, ehe eine Freischaltung des unbegrenzten Gierrateneingriffs erfolgt. Durch das erfindungsgemäße Verfahren wird eine frühzeitige Freischaltung eines vorsteuernden Eingriffs, welcher eine Instabilität bereits im Ansatz verhindert, ermöglicht. Die Auswertung von Häufigkeitsverteilungen von Fahrprofilen zeigt, dass bestimmte Situationen wie z.B. die Fahrt mit sehr hoher Querbeschleunigung oder das starke Bremsen oder Verzögern nur extrem selten auftreten. Für solche seltenen Situationen erfolgt bei der Risikoeinschätzung bezüglich der Häufigkeit eine Einstufung in ein Exposure von E2 oder E1. Somit reicht das normale ASIL Level B der eigentlichen Gierratenregelungsfunktion aus und es ist keine zusätzliche sichere Erkennung eines instabilen Fahrzustands mehr notwendig. So genügt es, diese seltene Fahrsituation entsprechend sicher zu erkennen. Eine sichere Erkennung ist gewährleistet, wenn der Sensorwert abzüglich der Sensortoleranz die entsprechende Schwelle überschreitet.

Durch die Freischaltung der Gierratenregelungsfunktion sowohl über die Erkennung von Instabilitäten als auch über die Erkennung bestimmter seltener Fahrsituationen wird erreicht, dass in vielen Fällen die Freischaltung im Nutzfall ohne jede Verzögerung erfolgt, insbesondere auf Hochreibwert: Nutzfälle für die Gierratenregelungsfunktion ergeben sich in der Regel nur, wenn das Kraftschlusspotential der Fahrbahn bereits zu einem großen Teil ausgeschöpft ist. Auf Hochreibwert geht diese Kraftschlussausnutzung einher mit einer großen Querbeschleunigung und/oder Fahrzeugverzögerung, also einer Situation, die mit der Häufigkeit E2 oder E1 bewertet wird und für die die Gierratenregelungsfunktion über die genannten Bedingungen generell freigeschaltet wird. Da in diesen Situationen nicht auf eine Gierratenabweichung gewartet werden muss, kann der Gierratenregeleingriff frühzeitig und mit voller Stärke erfolgen.

Auf Niedrigreibwert kann über die Gierratenabweichung eine tatsächliche Instabilität erkannt werden, um die instabile Fahrt auf Niedrigreibwert von der stabilen Fahrt auf Hochreibwert bei vergleichbarem Querbeschleunigungsniveau unterscheiden zu können. Mit den genannten Mechanismen erfolgt bei normalen Fahrten auf Hochreibwert eine Freischaltung der Gierratenregelungsfunktion während weniger als 1% der Zeit und weist damit eine Häufigkeit von nur noch E2 auf. Da die Situationserkennung voll in ASIL D implementiert ist, findet keine Dekomposition in eine B(D) Use-Case-Erkennung und einen B(D)-Regler statt. Das Sicherheitsziel, fehlerinduzierte Destabilisierung des Fahrzeugs zu vermeiden, wurde mit den Werten [S3;E4;C3] für Severity Class, Exposure Class und Controllability Class definiert. Die Begrenzung der Freischaltung der Gierratenregelungsfunktion auf Fahrsituationen mit einer Auftretenswahrscheinlichkeit kleiner 1% reduziert nun die Exposure von E4 auf E2. Nach ISO 26262-3:201.8(E) Tabelle 4 reduziert sich damit das ASIL auf B. Dies bringt mehrere Vorteile: Der Regler muss nicht in einer Safety Task laufen und für den Regleranteil müssen nur die B-Metriken auf Software-Ebene erfüllt werden. Außerdem können die Deaktivierungsfunktion (FunctionDisable) und der Regler selbst basierend auf den gleichen Signalen angesteuert werden, da keine Unabhängigkeit bestehen muss.

In einer bevorzugten Ausführungsform sind die Grenzwerte der Aktivierungsvoraussetzungen derart gewählt, dass diese zu weniger als 1% der Betriebszeit erfüllt sind. Damit genügt eine Auslegung nach ASIL B.

Erfindungsgemäß sperrt die Deaktivierungsfunktion die Gierratenregelungsfunktion vollständig, wenn keine Aktivierungsvoraussetzung erfüllt ist, das heißt, die Gierratenregelungsfunktion darf keinen Aktuator ansteuern und entsprechend keinen Eingriff in die Steuerung des Kraftfahrzeugs vornehmen. Alternativ sperrt die Deaktivierungsfunktion die Gierratenregelungsfunktion nur teilweise. Die Steuerungseingriffe der Gierratenregelungsfunktion können dann vermindert an den jeweiligen Aktuator gesendet werden, so dass nur schwache Eingriffe erfolgen, welche die Sicherheit des Fahrzeugs bei Fehleingriffen nicht gefährden. Außerdem ist es möglich die Sperrung für verschiedene Aktuatoren unterschiedlich zu gestalten. Beispielsweise kann ein Bremseingriff vermindert umgesetzt werden und ein Lenkeingriff vollständig gesperrt werden, wenn keine Aktivierungsvoraussetzung erfüllt ist.

In einer bevorzugten Ausführungsform ist die Deaktivierungsfunktion der Gierratenregelungsfunktion vorgelagert und/oder nachgelagert. Eine vorgelagerte Deaktivierungsfunktion sendet ein Signal an die Gierratenregelungsfunktion und teilt dieser mit, ob sie freigeschaltet oder deaktiviert ist. Die Gierratenregelungsfunktion kann dann entsprechend einen Eingriff durchführen oder nicht. Um auch bei Fehlern der Gierratenregelungsfunktion, bei der diese trotz einer eigentlichen Deaktivierung falsche Eingriffe ausführt, ein sicheres Konzept aufzuweisen, kann die Deaktivierungsfunktion auch nachgelagert werden. Das bedeutet, die Gierratenregelungsfunktion hat keinen direkten Kommunikationspfad an den eigentlichen Aktuator, sondern kommuniziert über eine Sicherheitsbarriere. Diese Sicherheitsbarriere kann im freigeschalteten Zustand einen gesendeten Befehl der Gierratenregelungsfunktion an den Aktuator weiterleiten und im nicht freigeschalteten Zustand den Befehl nicht weiterleiten oder einen verminderten Eingriff befehlen.

In einer bevorzugten Ausführungsform ist der Längsverzögerungsgrenzwert größer als 2,5 m/s² bevorzugt größer als 3 m/s². Entsprechend wird erst bei stärkeren Verzögerungen von einer Situation ausgegangen, in der gegebenenfalls eine Gierratenregelungsfunktion benötigt wird. Somit wird die Freischaltungszeit wirkungsvoll reduziert.

In einer bevorzugten Ausführungsform ist der Längsverzögerungsgrenzwert geschwindigkeitsabhängig und fällt insbesondere mit höheren Fahrzeuggeschwindigkeiten. So kann beispielsweise unterhalb von 100km/h ein Längsverzögerungsgrenzwert von 4 m/s²gewählt werden und oberhalb von 100 km/h ein Längsverzögerungsgrenzwert von 3 m/s².

In einer bevorzugten Ausführungsform wird die Längsverzögerung mittels eines Beschleunigungssensors, aus der Ableitung der Fahrzeuggeschwindigkeit und/oder aus Daten des Bremssystems bestimmt. Es ist möglich Längsverzögerungswerte aus mehreren Quellen einzeln mit dem Längsverzögerungsgrenzwert zu vergleichen und/oder einen Mittelwert zu bilden und diesen für den Vergleich zu nutzen.

In einer bevorzugten Ausführungsform ist der Querbeschleunigungsgrenzwert größer als 2,5 m/s². Legt man den Querbeschleunigungsgrenzwert beispielsweise auf a_{Limit,E2} = 3,5 m/s² und weist der verwendete Sensor eine Sensortoleranz von 2 m/s² auf, so muss der Betrag der gemessenen Querbeschleunigung mindestens 5,5 m/s² betragen, sodass die Aktivierungsbedingung erfüllt ist. Durch die Einbeziehung der Sensortoleranz wird vermieden, dass durch Messfehler zu häufige Aktivierungen stattfinden.

In einer bevorzugten Ausführungsform wird die Querbeschleunigung aus Messwerten eines Beschleunigungssensors und/oder eines Gierratensensors und der Fahrzeuggeschwindigkeit bestimmt. Da verschiedene Sensoren verschiedene Toleranzen aufweisen, kann anstelle des Querbeschleunigungssensors auch der Gierratensensor zur Bestimmung der Querbeschleunigung und damit zur Freischaltung der Gierratenregelfunktion genutzt werden. Dazu kann die Gierrate und die zugehörige Toleranz des Gierratensensors in eine Querbeschleunigung umgerechnet werden.

In einer bevorzugten Ausführungsform wird als zusätzliche Aktivierungsvoraussetzung das Vorliegen eines ABS-Eingriffs überprüft. Sobald eine der obigen Aktivierungsvorraussetzungen oder ein ABS-Eingriff vorliegt, wird die Gierratenregelungsfunktion freigeschaltet. Da ABS-Eingriffe aufgrund der geringen Auftretenswahrscheinlichkeit mit E2 bewertet werden, reicht das ASIL B der normalen Gierratenregelungsfunktion während ABS Eingriffen aus.

In einer bevorzugten Ausführungsform wird als zusätzliche Aktivierungsvoraussetzung überprüft, obein Schwimmwinkelsignal, insbesondere um eine Sensortoleranz betragsmäßig größer ist als ein Schwimmwinkelgrenzwert. Dies kann insbesondere genutzt werden, wenn ein Schwimmwinkelsignal nach ASIL D vorliegt. Das Schwimmwinkelsignal kann beispielsweise über einen zusätzlichen Correvit Sensor optisch gemessen werden. Auch ist es möglich den Schwimmwinkel über eine für autonomes Fahren bereits erforderliche Kamera zu bestimmen oder auch über ein Modell unter Nutzung der normalen ESP Sensorik zu schätzen. Auf einen "Use Case" kann geschlossen werden, wenn das Schwimmwinkelsignal einen vorgegeben Schwellwert überschreitet. Sobald eine der obigen Aktivierungsvorraussetzungen erfüllt ist oder ein entsprechender Schwimmwinkel vorliegt, wird die Gierratenregelungsfunktion freigeschaltet.

Der Schwellwert kann entweder fest vorgegeben oder situationsabhängig über ein Referenzmodell berechnet werden. Das bekannte Ackermann-Einspurmodell liefert neben der Referenzgierrate bereits einen Referenzschwimmwinkel, der hierzu Anwendung finden kann.

Alternativ kann ein bestimmter Hinterachs-Schräglaufwinkel als Kriterium definiert werden und über dieses Kriterium ein Schwellwert für den Schwimmwinkel im Fahrzeugschwerpunkt bestimmt werden. Zwischen dem Schwimmwinkel (β) im Schwerpunkt und dem Hinterachs-Schräglaufwinkel (αₕ) besteht ein rein geometrischer Zusammenhang: ${α}_{h} = {δ}_{h} + β + \frac{{l}_{h} ⋅ \dot{ψ}}{v}$

δₕ bezieht sich hier auf den von einer eventuell vorhandenen Hinterachs-Lenkung eingestellten Lenkwinkel.

Der zusätzliche Nutzen der Freischaltung über das Schwimmwinkelsignal liegt insbesondere im Bereich niedriger Reibwerte, da in diesem Fall schwieriger über das Kriterium einer hohen Querbeschleunigung freigeschaltet werden kann. Auf Niedrigreibwert gibt es bestimmte Situationen, in denen das Fahrzeug langsam eindreht, wobei die modellgestützte Erkennung über die Abweichung der Ist-Gierrate zur entweder aus dem momentanen Lenkwinkel oder aus der momentanen Querbeschleunigung berechneten Referenzgierrate nicht oder erst spät ausschlägt, da die Abweichungen zu gering sind, solange der Fahrer nicht gegenlenkt.

In einer bevorzugten Ausführungsform wird als zusätzliche Aktivierungsvoraussetzung überprüft, ob ein Längsbeschleunigungssignal, insbesondere um eine Sensortoleranz größer ist als ein Längsbeschleunigungsgrenzwert. Unter einer Längsbeschleunigung ist hierbei eine positive Geschwindigkeitsänderung zu verstehen. Wie schon bei den Verzögerungen gibt es bestimmte Beschleunigungszustände (z.B. >3 m/s²), welche nur sehr selten auftreten und deshalb eine Freischaltung der Gierratenregelungsfunktion erlauben. Die Fahrzeugbeschleunigung kann entweder über einen Beschleunigungssensor, über die Ableitung eines aus den Radgeschwindigkeiten ermittelten Geschwindigkeitssignals berechnet oder aus dem wirksamen Antriebsmoment abgeschätzt werden. Sobald eine der obigen Aktivierungsvorraussetzungen oder ein entsprechendes Beschleunigungssignal vorliegt, wird die Gierratenregelungsfunktion freigeschaltet. Somit können auch insbesondere Instabilitäten beim Anfahren frühzeitig erkannt werden.

In einer bevorzugten Ausführungsform wird als zusätzliche Aktivierungsvoraussetzung überprüft, ob eine Fahrzeuggeschwindigkeit, insbesondere um eine Sensortoleranz größer ist als ein Fahrzeuggeschwindigkeitsgrenzwert. Da auch sehr hohe Fahrzeuggeschwindigkeiten sehr selten auftreten, kann auch die Fahrzeuggeschwindigkeit direkt als alternative Aktvierungsvoraussetzung genutzt werden. So kann beispielsweise bei Geschwindigkeiten oberhalb von 160 km/h grundsätzlich freigeschaltet werden.

In einer bevorzugten Ausführungsform wird als zusätzliche Aktivierungsvoraussetzung überprüft, ob ein Lenkwinkel, insbesondere um eine Sensortoleranz betragsmäßig größer ist als ein insbesondere geschwindigkeitsabhängiger Lenkwinkelgrenzwert. Mittels eines inversen Einspurmodells kann eine geschwindigkeitsabhängige Lenkwinkelschwelle berechnet werden. Deren Überschreitung zeigt an, dass aufgrund des aktuellen Lenkwinkels entweder eine Fahrsituation mit ungewöhnlich hoher Querbeschleunigung, die aufgrund der Häufigkeitsverteilung eine Freischaltung der Gierratenregelungsfunktion erlaubt, oder aber eine instabile Fahrsituation, die per Definition einen Use Case darstellt, vorliegen muss. Sobald eine der obigen Aktivierungsvorraussetzungen oder ein entsprechender Lenkwinkel vorliegt, wird die Gierratenregelungsfunktion freigeschaltet.

In einer bevorzugten Ausführungsform wird die Gierratenregelungsfunktion nicht in einer Safety Task ausgeführt und die Deaktivierungsfunktion wird in einer Safety Task ausgeführt.

Die Aufgabe wird außerdem gelöst durch eine Steuereinheit zur Gierratenregelung nach Anspruch 15 die dazu eingerichtet ist, ein vorstehendes Verfahren auszuführen.

Weitere Merkmale, Vorteile und Anwendungsmöglichkeiten der Erfindung ergeben sich auch durch die nachfolgende Beschreibung von Ausführungsbeispielen und der Zeichnungen.

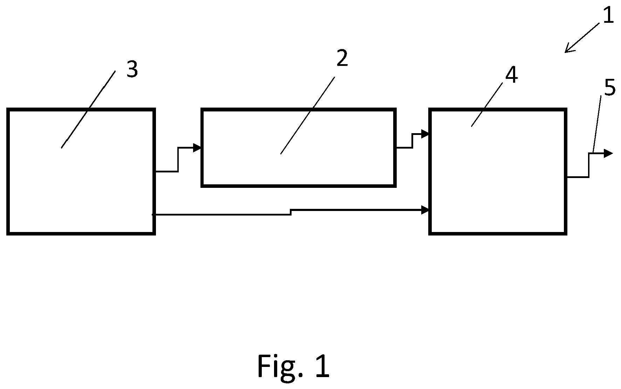

Fig. 1 zeigt schematisch eine erfindungsgemäße Gierratenregelung;

Die Gierratenregelung 1, wie sie in Fig. 1 dargestellt ist, weißt als zentrales Element die eigentliche Gierratenregelungsfunktion 2 auf, welche durch die Deaktivierungsfunktion 3, 4 umschlossen ist. Ein vorgelagerter Teil der Deaktivierungsfunktion 3, 4 wird als Funktionsdeaktivierer (FunctionDisable) 3 bezeichnet und überprüft die implementierten Aktivierungsvoraussetzungen. Dies sind insbesondere die Querbeschleunigung des Kraftfahrzeugs, die Längsverzögerung des Kraftfahrzeugs und die Gierrate des Kraftfahrzeugs. Im allgemeinen Fall, deaktiviert der Funktionsdeaktivierer 3 die Gierratenregelungsfunktion 2, indem dieser ein entsprechendes Signal an die Gierratenregelungsfunktion 2 sendet. Der Funktionsdeaktivierer 3 sendet außerdem das Deaktivierungssignal an eine nachgelagerte Sicherheitsbarriere 4. Die Sicherheitsbarriere 4 ist zwischen die Gierratenregelungsfunktion 2 und den oder die entsprechenden Aktuatoren 5 geschaltet. Der Zugriff der Gierratenregelungsfunktion 2 auf die Aktuatoren 5 erfolgt daher über die Sicherheitsbarriere 4, ein direkter Kommunikationspfad besteht nicht. Die Sicherheitsbarriere 4 kann basierend auf dem Signal vom Funktionsdeaktivierer 3 einen Befehl an die Aktuatoren 5 weiterleiten oder nicht.

Somit wird sichergestellt, dass die Gierratenregelungsfunktion 2 nur in Use Cases Eingriffe in die Fahrzeugsteuerung durchführt.

## Patentansprüche

1. Verfahren zur Gierratenregelung wobei eine Gierratenregelungsfunktion (2) zur Stabilisierung eines Fahrzeugs radindividuelle Bremseingriffe basierend auf einer ersten Referenzgierrate durchführt, **dadurch gekennzeichnet, dass** eine Deaktivierungsfunktion (3, 4) die Gierratenregelungsfunktion (2) freischaltet sobald zumindest eine Aktivierungsvoraussetzung erfüllt ist, wobei als Aktivierungsvoraussetzung zumindest überprüft wird, ob
- eine Längsverzögerung, insbesondere um eine Sensortoleranz größer ist als ein Längsverzögerungsgrenzwert,
- eine Querbeschleunigung insbesondere um eine Sensortoleranz betragsmäßig größer ist als ein Querbeschleunigungsgrenzwert und
- eine Abweichung zwischen einer zweiten Referenzgierrate und einer gemessenen Gierrate insbesondere um eine Sensortoleranz größer ist als ein Gierratenabweichungsgrenzwert,
wobei die Deaktivierungsfunktion (3, 4) die Gierratenregelungsfunktion (2) vollständig oder teilweise sperrt, wenn keine Aktivierungsvoraussetzung erfüllt ist, und wobei die zweite Referenzgierrate aus einem gemessenen Lenkwinkel und/oder einer gemessenen Querbeschleunigung des Fahrzeugs berechnet wird.

2. Verfahren nach einem der vorhergehenden Ansprüche, **dadurch gekennzeichnet, dass** die Grenzwerte der Aktivierungsvoraussetzungen derart gewählt sind, dass diese zu weniger als 1% der Betriebszeit erfüllt sind.

3. Verfahren nach einem der vorhergehenden Ansprüche, **dadurch gekennzeichnet, dass** die Deaktivierungsfunktion (3, 4) der Gierratenregelungsfunktion (2) vorgelagert und/oder nachgelagert ist.

4. Verfahren nach einem der vorhergehenden Ansprüche, **dadurch gekennzeichnet, dass** der Längsverzögerungsgrenzwert größer als 2,5 m/s² ist

5. Verfahren nach einem der vorhergehenden Ansprüche, **dadurch gekennzeichnet, dass** der Längsverzögerungsgrenzwert geschwindigkeitsabhängig ist und insbesondere mit höheren Fahrzeuggeschwindigkeiten fällt.

6. Verfahren nach einem der vorhergehenden Ansprüche, **dadurch gekennzeichnet, dass** die Längsverzögerung mittels eines Beschleunigungssensors, aus der Ableitung der Fahrzeuggeschwindigkeit und/oder aus Daten des Bremssystems bestimmt wird.

7. Verfahren nach einem der vorhergehenden Ansprüche, **dadurch gekennzeichnet, dass** der Querbeschleunigungsgrenzwert größer als 2,5 m/s² ist

8. Verfahren nach einem der vorhergehenden Ansprüche, **dadurch gekennzeichnet, dass** die Querbeschleunigung aus Messwerten eines Beschleunigungssensors und/oder eines Gierratensensors und der Fahrzeuggeschwindigkeit bestimmt wird.

9. Verfahren nach einem der vorhergehenden Ansprüche, **dadurch gekennzeichnet, dass** als weitere alternative Aktivierungsvoraussetzung das Vorliegen eines ABS-Eingriffs überprüft wird.

10. Verfahren nach einem der vorhergehenden Ansprüche, **dadurch gekennzeichnet, dass** als weitere alternative Aktivierungsvoraussetzung überprüft wird, ob ein Schwimmwinkelsignal, insbesondere um eine Sensortoleranz betragsmäßig größer ist als ein Schwimmwinkelgrenzwert.

11. Verfahren nach einem der vorhergehenden Ansprüche, **dadurch gekennzeichnet, dass** als weitere alternative Aktivierungsvoraussetzung überprüft wird, ob ein Längsbeschleunigungssignal, insbesondere um eine Sensortoleranz größer ist als ein Längsbeschleunigungsgrenzwert.

12. Verfahren nach einem der vorhergehenden Ansprüche, **dadurch gekennzeichnet, dass** als weitere alternative Aktivierungsvoraussetzung überprüft wird, ob eine Fahrzeuggeschwindigkeit, insbesondere um eine Sensortoleranz größer ist als ein Fahrzeuggeschwindigkeitsgrenzwert.

13. Verfahren nach einem der vorhergehenden Ansprüche, **dadurch gekennzeichnet, dass** als weitere alternative Aktivierungsvoraussetzung überprüft wird, ob ein Lenkwinkel, insbesondere um eine Sensortoleranz betragsmäßig größer ist als ein insbesondere geschwindigkeitsabhängiger Lenkwinkelgrenzwert.

14. Verfahren nach einem der vorhergehenden Ansprüche, **dadurch gekennzeichnet, dass** die Gierratenregelungsfunktion (2) nicht in einer Safety Task ausgeführt wird und die Deaktivierungsfunktion (3, 4) in einer Safety Task ausgeführt wird.

15. Steuereinheit zur Gierratenregelung **dadurch gekennzeichnet, dass** diese dazu eingerichtet ist, ein Verfahren nach einem der Ansprüche 1 bis 14 auszuführen.

## Claims

1. A yaw rate control method, wherein a yaw rate control function (2) for stabilizing a vehicle carries out wheel-specific braking interventions based on a first reference yaw rate, **characterized in that** a deactivation function (3, 4) enables the yaw rate control function (2) as soon as at least one activation requirement is met, wherein, as the activation requirement, it is at least checked whether
- a longitudinal deceleration is greater than a longitudinal deceleration limit value, in particular by a sensor tolerance,
- a lateral acceleration is greater in terms of absolute value than a lateral acceleration limit value, in particular by a sensor tolerance, and
- a deviation between a second reference yaw rate and a measured yaw rate is greater than a yaw rate deviation limit value, in particular by a sensor tolerance,
wherein the deactivation function (3, 4) completely or partially disables the yaw rate control function (2) if no activation requirement is met, and wherein the second reference yaw rate is calculated from a measured steering angle and/or a measured lateral acceleration of the vehicle.

2. The method as claimed in any one of the preceding claims, **characterized in that** the limit values of the activation requirements are selected in such a way that they are met for less than 1% of the operating time.

3. The method as claimed in any one of the preceding claims, **characterized in that** the deactivation function (3, 4) is upstream and/or downstream of the yaw rate control function (2).

4. The method as claimed in any one of the preceding claims, **characterized in that** the longitudinal deceleration limit value is greater than 2.5 m/s².

5. The method as claimed in any one of the preceding claims, **characterized in that** the longitudinal deceleration limit value depends on the speed and falls in particular with higher vehicle speeds.

6. The method as claimed in any one of the preceding claims, **characterized in that** the longitudinal deceleration is determined, by means of an acceleration sensor, from the derivative of the vehicle speed and/or from data from the brake system.

7. The method as claimed in any one of the preceding claims, **characterized in that** the lateral acceleration limit value is greater than 2.5 m/s².

8. The method as claimed in any one of the preceding claims, **characterized in that** the lateral acceleration is determined from measured values from an acceleration sensor and/or from a yaw rate sensor and the vehicle speed.

9. The method as claimed in any one of the preceding claims, **characterized in that,** as a further alternative activation requirement, the presence of an ABS intervention is checked.

10. The method as claimed in any one of the preceding claims, **characterized in that,** as a further alternative activation requirement, it is checked whether a side slip angle signal is greater in terms of absolute value than a side slip angle limit value, in particular by a sensor tolerance.

11. The method as claimed in any one of the preceding claims, **characterized in that,** as a further alternative activation requirement, it is checked whether a longitudinal acceleration signal is greater than a longitudinal acceleration limit value, in particular by a sensor tolerance.

12. The method as claimed in any one of the preceding claims, **characterized in that,** as a further alternative activation requirement, it is checked whether a vehicle speed is greater than a vehicle speed limit value, in particular by a sensor tolerance.

13. The method as claimed in any one of the preceding claims, **characterized in that,** as a further alternative activation requirement, it is checked whether a steering angle is greater in terms of absolute value, in particular by a sensor tolerance, than a steering angle limit value that is in particular dependent on the speed.

14. The method as claimed in any one of the preceding claims, **characterized in that** the yaw rate control function (2) is not performed in a safety task and the deactivation function (3, 4) is performed in a safety task.

15. A control unit for yaw rate control, **characterized in that** it is configured to carry out a method as claimed in any one of claims 1 to 14.

## Revendications

1. Procédé de régulation de vitesse de lacet dans lequel une fonction de régulation de vitesse de lacet (2) effectue des interventions de freinage individuelles sur chaque roue, sur la base d'une première vitesse de lacet de référence, afin de stabiliser un véhicule, **caractérisé en ce qu'**une fonction de désactivation (3, 4) déverrouille la fonction de régulation de vitesse de lacet (2) dès qu'au moins une condition d'activation est satisfaite, dans lequel, comme condition d'activation, il est au moins vérifié si
- une décélération longitudinale est supérieure, en particulier d'une tolérance de capteur, à une valeur seuil de décélération longitudinale,
- une accélération transversale, en particulier d'une tolérance de capteur, est supérieure en valeur absolue à une valeur seuil d'accélération transversale et
- un écart entre une seconde vitesse de lacet de référence et une vitesse de lacet mesurée, en particulier d'une tolérance du capteur, est supérieur à une valeur seuil d'écart de vitesse de lacet,
dans lequel la fonction de désactivation (3, 4) désactive complètement ou partiellement la fonction de régulation de vitesse de lacet (2) lorsqu'aucune condition d'activation n'est satisfaite, et dans lequel la seconde vitesse de lacet de référence est calculée à partir d'un angle de braquage mesuré et/ou d'une accélération transversale mesurée du véhicule.

2. Procédé selon l'une des revendications précédentes, **caractérisé en ce que** les valeurs seuil des conditions d'activation sont choisies de manière à être satisfaites pendant moins de 1 % du temps de fonctionnement.

3. Procédé selon l'une des revendications précédentes, **caractérisé en ce que** la fonction de désactivation (3, 4) est en amont et/ou en aval de la fonction de régulation de vitesse de lacet (2).

4. Procédé selon l'une des revendications précédentes, **caractérisé en ce que** la valeur seuil de décélération longitudinale est supérieure à 2,5 m/s².

5. Procédé selon l'une des revendications précédentes, **caractérisé en ce que** la valeur seuil de décélération longitudinale dépend de la vitesse et diminue en particulier avec l'augmentation de la vitesse du véhicule.

6. Procédé selon l'une des revendications précédentes, **caractérisé en ce que** la décélération longitudinale est déterminée au moyen d'un capteur d'accélération, à partir de la dérivation de la vitesse du véhicule et/ou à partir de données du système de freinage.

7. Procédé selon l'une des revendications précédentes, **caractérisé en ce que** la valeur seuil d'accélération transversale est supérieure à 2,5 m/s².

8. Procédé selon l'une des revendications précédentes, **caractérisé en ce que** l'accélération transversale est déterminée à partir des valeurs mesurées d'un capteur d'accélération et/ou d'un capteur de vitesse de lacet et de la vitesse du véhicule.

9. Procédé selon l'une des revendications précédentes, **caractérisé en ce que** la présence d'une intervention ABS est vérifiée comme condition d'activation alternative supplémentaire.

10. Procédé selon l'une des revendications précédentes, **caractérisé en ce que,** comme condition d'activation alternative supplémentaire, il est vérifié si un signal d'angle de dérive, en particulier d'une tolérance de capteur, est supérieur en valeur absolue à une valeur seuil d'angle de dérive.

11. Procédé selon l'une des revendications précédentes, **caractérisé en ce que,** comme condition d'activation alternative supplémentaire, il est vérifié si un signal d'accélération longitudinale, en particulier d'une tolérance de capteur, est supérieur à une valeur seuil d'accélération longitudinale.

12. Procédé selon l'une des revendications précédentes, **caractérisé en ce que,** comme condition d'activation alternative supplémentaire, il est vérifié si la vitesse du véhicule, en particulier d'une tolérance de capteur, est supérieure à une valeur seuil de vitesse du véhicule.

13. Procédé selon l'une des revendications précédentes, **caractérisé en ce que,** comme condition d'activation alternative supplémentaire, il est vérifié si un angle de braquage, notamment d'une tolérance de capteur, est supérieur en valeur absolue à une valeur seuil d'angle de braquage, en particulier dépendant de la vitesse.

14. Procédé selon l'une des revendications précédentes, **caractérisé en ce que** la fonction de régulation de vitesse de lacet (2) n'est pas exécutée dans une tâche de sécurité et que la fonction de désactivation (3, 4) est exécutée dans une tâche de sécurité.

15. Unité de commande pour la régulation de la vitesse de lacet **caractérisée en ce qu'**elle est configurée pour réaliser un procédé selon l'une des revendications 1 à 14.
